# EUROPEAN PATENT SPECIFICATION

(11) **EP 3 819 120 B1**
(45) Date of publication and mention of the grant of the patent: **28.06.2023**
(21) Application number: 19207055.5
(22) Date of filing: 05.11.2019
(51) Int. Cl.: B32B 27/08

(54) **PHOSPHORESCENT THERMOPLASTIC COMPOSITE LAYERED STRUCTURE**
PHOSPHORESZIERENDE THERMOPLASTISCHE VERBUNDSCHICHTSTRUKTUR
STRUCTURE COMPOSITE THERMOPLASTIQUE PHOSPHORESCENTE EN COUCHE

(43) Date of publication of application: 12.05.2021
(73) Proprietor: Corex Materials Corporation, Taichung City (TW)
(72) Inventor: HO, Ying-Jan, Taichung City (TW); COAT, Pierre, Taichung City (TW); CHIU, Shao-Chen, Taichung City (TW)
(74) Representative: Pallini Gervasi, Diego

(56) References cited:
- US-A- 5 135 591
- US-A- 5 692 895
- US-A1- 2016 045 931

## Description

### 1. Field of the Invention

The present invention relates to a phosphorescent thermoplastic composite layered structure, and more particularly relates to a phosphorescent thermoplastic composite layered structure that may increase productivity, be reused, and improve structural toughness compared to those of a conventional phosphorescent thermosetting composite layered structure.

### 2. Description of Related Art

A conventional phosphorescent thermosetting composite layered structure (the prepreg) comprises a phosphorescent thermosetting resin (the matrix) and an oriented continuous fibrous reinforcement (the fibers). The thermosetting resin is composed of a thermosetting polymer and a phosphorescent compound. Layers of thermosetting prepregs are then layered following a sequence of fiber orientation and then subsequently heated and pressurized. During the thermosetting step, the molecular weight of the thermosetting resin increases and chemical bridges might form between individual polymer chains to generate a network structure transforming the polymer from a viscous liquid to an elastic solid. The thermosetting resin might be an epoxy resin, a phenol resin, a polyester resin, or any resin that can go through an irreversible cross-linking reaction to create a solid. Following the cross-linking reaction, the thermosetting resin becomes intractable (cannot be re-melted) and inert to most solvents, preventing subsequent reprocessing.

The phosphorescent material can absorb and store an excitation light source having a wavelength between 200 and 700 nanometers (nm). When the excitation light source stops providing light energy, the phosphorescent material can gradually release the stored energy in the form of light, and the process of releasing the light can last for several hours. Then the phosphorescent material has a temporary light-emitting effect. The phosphorescent material might include a sulfide, an aluminate, a silicate, etc. The reinforcing fiber is used as a reinforcing material for the conventional phosphorescent thermosetting composite layered structure to increase the structural strength of the conventional phosphorescent thermosetting composite layered structure.

To manufacture the conventional phosphorescent thermosetting composite layered structure, firstly, a thermosetting resin, a phosphorescent material, an additive, a curing agent, and an accelerator are uniformly mixed to form a colloid. Then the colloid is uniformly applied to the reinforcing fibers to form a prepreg. Layers of prepreg are then stacked following a fiber orientation sequence. The resulting structure (the pre-form) is then placed in a heated mold, and the temperature and pressure are combined at the same time to allow the colloid to permeate into the space between the reinforcing fibers and to cross-link to create a solid structure. In another process, the prepreg can be partially cured to a so-called beta-stage where cross-linking reactions are allowed to start to increase the viscosity of the thermosetting resin, but interrupted before full cure is occurring. The beta-stage prepreg is then cooled, trimmed, and protected by a release paper layer. Finally, according to the shape requirement of the product, the type of the polymer, and the type of the fiber, etc., for the hot-press forming process of the prepreg, the time required is between 10 and 60 minutes, and the processing temperature is between 120 and 180 ° C.

The conventional phosphorescent thermosetting composite layered structure has the effects of light storage and light emission, but in the manufacturing process, in order to avoid the curing of raw materials such as resin and prepreg (semi-finished products) before processing, the raw materials are usually stored at low temperature (<-15°C), the storage conditions are quite strict and the cost required for production is increased. Furthermore, since the prepreg matrix is viscous, it is necessary to package the prepreg with a release paper in order to avoid the prepreg to stick to itself or to surrounding objects, and this will increase the time and cost required for production, and lack economic benefits. Additionally, due to the materials properties of thermosetting, the conventional phosphorescent thermosetting composite layered structure cannot be repeatedly processed after heat curing, and this relatively lacks value for reuse. In addition, the conventional phosphorescent thermosetting composite layered structure after hot pressing has an insufficient inter-laminar fracture toughness value (0.1 to 1 kJ/m² ). In addition, other conventional phosphorescent thermosetting composite layered structures were also disclosed in US 5,692 895 A, US 5,135,591 A, and US 2016/045931 A1.

To overcome the shortcomings, the present invention provides a phosphorescent thermoplastic composite layered structure to mitigate or obviate the aforementioned problems.

### SUMMARY OF THE INVENTION

The main objective of the present invention is to provide a phosphorescent thermoplastic composite layered structure and a method of manufacturing said phosphorescent thermoplastic composite layered structure that may increase productivity, be reused, and improve structural toughness.

The phosphorescent thermoplastic composite layered structure in accordance with the present invention has multiple layered elements stacked upon each other. Each one of the multiple layered elements has a thermoplastic polymer (matrix) and an oriented continuous fibrous reinforcement (fibers) combined with the thermoplastic polymer (matrix). Furthermore, the thermoplastic polymer (matrix) contains a phosphorescent compound uniformly combined with the thermoplastic polymer. The oriented continuous fibrous reinforcement (fibers) is combined with the thermoplastic polymer (matrix) to form a phosphorescent prepreg, and layers of prepregs are subsequently consolidated in a shaped object by pressing and heating.

Furthermore, the phosphorescent compound is dispersed in the thermoplastic polymer (matrix) and has multiple particles distributed inside the polymer (matrix), and each two adjacent ones of the multiple layered elements stacked upon each other have an angle formed therebetween.

Other objects, advantages and novel features of the invention will become more apparent from the following detailed description when taken in conjunction with the accompanying drawings.

### IN THE DRAWINGS:

Fig. 1 is a cross sectional side view of a phosphorescent thermoplastic composite layered structure in accordance with the present invention;
Fig. 2 is an enlarged cross sectional side view of the phosphorescent thermoplastic composite layered structure in Fig. 1;
Fig. 3 is a top view of the phosphorescent thermoplastic composite layered structure in Fig. 1; and
Fig. 4 is a block flow diagram of a method of manufacturing a phosphorescent thermoplastic composite layered structure in accordance with the present invention.

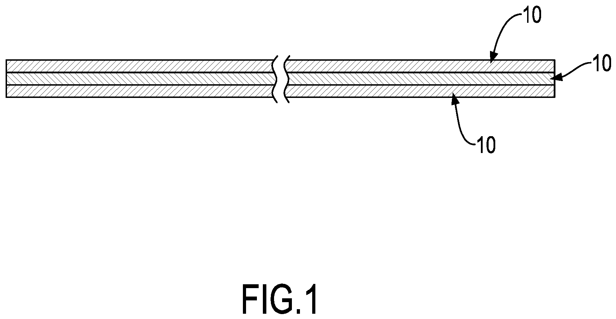

With reference to Figs. 1 to 3, a phosphorescent thermoplastic composite layered structure in accordance with the present invention comprises multiple layered elements 10, and each one of the multiple layered elements 10 has a thermoplastic polymer (matrix) and an oriented continuous fibrous reinforcement (fibers) 40 combined with the thermoplastic polymer (matrix). The thermoplastic polymer (matrix) of the at least one layered element 10 comprised of a thermoplastic polymer 20 and a phosphorescent compound 30. The thermoplastic polymer 20 can be either a semi-crystalline or amorphous polymers. The phosphorescent compound 30 is a powder and is mixed with the thermoplastic polymer 20. Furthermore, the phosphorescent compound 30 is a powder of sulfide, rare earth aluminate, rare earth silicate or rare earth sulphur oxide. Additionally, the phosphorescent compound 30 has multiple particles made of rare earth aluminate, and a center particle size (D50 is the diameter at which 50% of a sample's mass is comprised of smaller particles) of the multiple particles is between 10 and 80 micrometers (µm).

Preferably, the polymer matrix is further provided with a plasticizer and other additives, wherein the plasticizer enhances the mixing of the thermoplastic polymer 20 and the phosphorescent compound 30 by lowering the resin viscosity. Then the thermoplastic polymer 20 and the multiple particles of the phosphorescent compound 30 can be combined with the oriented continuous fibrous reinforcement (fibers) 40. The additives may be an antioxidant (increasing the oxidation resistance of the polymer matrix), a dispersing agent (uniformly dispersing the phosphorescent compound 30 in the polymer matrix), a coupling agent (enhancing the bonding property between the polymer matrix and the oriented continuous fibrous reinforcement (fibers) 40) , or a combination of them.

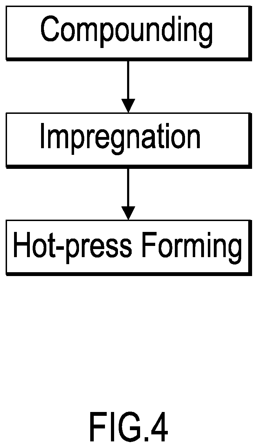

With reference to Fig. 4, after uniformly mixing the thermoplastic polymer 20, the phosphorescent compound 30, the plasticizer, and the additives, the thermoplastic polymer (matrix) is formed into a phosphorescent thermoplastic resin, that is, a first operating step of manufacturing a phosphorescent thermoplastic composite layered structure: compounding. Furthermore, the thermoplastic polymer 20, the phosphorescent compound 30, the plasticizer, and the additives are mixed at a weight percentage of 50 to 95%, 5 to 50%, 0 to 60%, and 0 to 10%, respectively.

The oriented continuous fibrous reinforcement (fibers) 40 has multiple continuous fibers. Preferably, the continuous fibers comprise carbon fibers, glass fibers, mineral fibers, and polymer fibers, etc. The appearance of the continuous fibers may be short fibers, long fibers, continuous fibers, or woven fibers, etc. In manufacture, the phosphorescent thermoplastic resin is uniformly applied to the continuous fibers, and the phosphorescent thermoplastic resin is infused into the space between the continuous fibers by increasing temperature and pressure.

The phosphorescent thermoplastic resin is melted above its glass transition temperature (for an amorphous polymer) or its melting point temperature (for a semi-crystalline polymer), and at a temperature at which the polymer viscosity is low enough for viscous flow to occur in order to uniformly and fully impregnate the fibrous reinforcement. After cooling to a temperature lower than the polymer glass transition temperature (for an amorphous polymer) or the polymer crystallization point (for a semi-crystalline polymer), a prepreg of the phosphorescent thermoplastic composite layered structure is formed, and the foregoing operation is the second operating step in the manufacturing process as shown in Fig. 4: impregnation. Then according to requirements of product shapes, types of polymer, and types of fiber, etc., an operating step of hot-press forming of the prepreg, the time required for the prepreg is less than 5 minutes, and the processing temperature is between 140 and 300°C. After the above-mentioned hot-press forming, a phosphorescent thermoplastic composite layered structure of the present invention is produced.

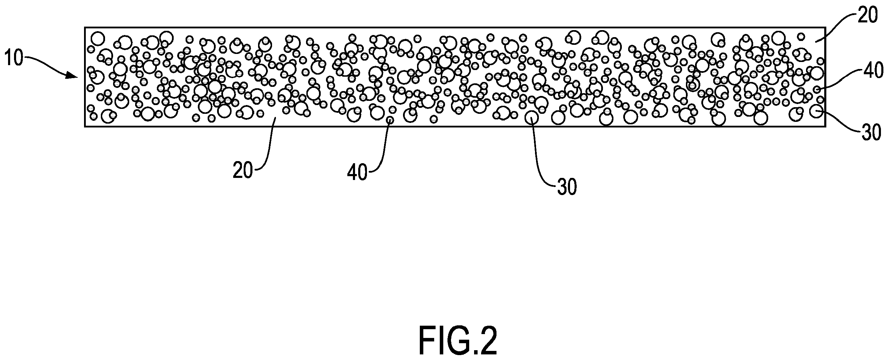

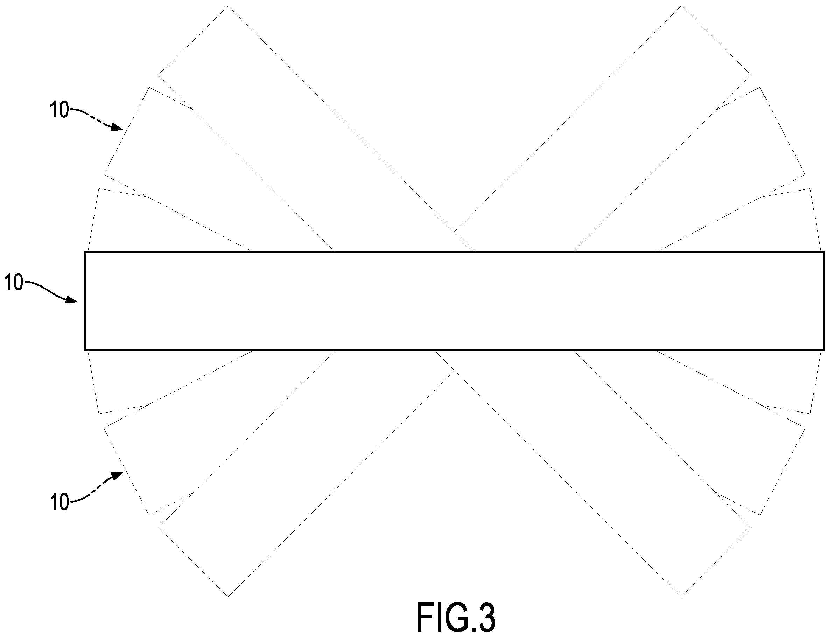

Furthermore, with reference to Figs. 1 and 2, the phosphorescent thermoplastic composite layered structure is provided with three layered elements 10, and the layered elements 10 are stacked upon each other. In addition, with reference to Fig. 3, the phosphorescent thermoplastic composite layered structure is provided with multiple layered elements 10 stacked upon each other, and each two adjacent ones of the multiple layered elements 10 stacked upon each other have an angle formed between them. Preferably, the thickness of the layered elements 10 may be uniform or non-uniform.

With the above-mentioned technical features and structural relationships, the phosphorescent thermoplastic composite layered structure of the present invention uses the thermoplastic polymer 20 as one of the raw materials of the polymer matrix, so that the prepreg can be stored at room temperature indefinitely. Furthermore, the surface of the prepreg that is made from the thermoplastic polymer 20 is dry and devoid of tackiness and does not cause sticking. Therefore, it is not necessary to use a release paper for packaging during the production process, which not only shortens the production time but also reduces the cost.

Additionally, due to the material properties of the thermoplastic polymer 20, the phosphorescent thermoplastic composite layered structure of the present invention, after the step of hot press forming, can be repeatedly reprocessed by reheating, and has the value of reuse and conforms to the trend of environmental protection. Further, the time required for hot-press forming (less than 5 minutes) is shorter than the conventional thermosetting resin (10 to 60 minutes), and can effectively improve the production efficiency.

In addition, the phosphorescent thermoplastic composite layered structure made of the thermoplastic polymer 20 has an inter-laminar fracture toughness value of 1 to 10 kJ/m², higher than the toughness value of the conventional phosphorescent thermosetting composite layered structure (0~1 kJ/m²), the tensile strength is greater than 300 MPa, and the tensile modulus is greater than 17 GPa with woven glass fabric at fiber volume fraction: 50%. The continuous illuminating time is more than 12 hours. Therefore, the present invention can effectively improve the structural toughness of the phosphorescent thermoplastic composite layered structure, thereby increasing the application range, thereby providing an improvement in production efficiency, re-use, and improvement of structural toughness.

## Claims

1. A phosphorescent thermoplastic composite layered structure having:
multiple layered elements (10) stacked upon each other, and each one of the multiple layered elements (10) having
a polymer matrix; and
a reinforcing fiber combined with the polymer matrix;
wherein the polymer matrix comprises a thermoplastic resin (20) and a phosphorescent compound (30), the phosphorescent compound (30) is dispersed in the thermoplastic resin (20) and has multiple particles distributed inside the thermoplastic resin (20), and the reinforcing fiber is combined with the polymer matrix of the multiple layered elements (10) and each two adjacent ones of the multiple layered elements (10) stacked upon each other have an angle formed therebetween.

2. The phosphorescent thermoplastic composite layered structure as claimed in claim 1, wherein the thermoplastic resin (20) comprises semi-crystalline or amorphous polymers.

3. The phosphorescent thermoplastic composite layered structure as claimed in claim 1 or 2, wherein the phosphorescent compound (30) is comprised of multiple particles made of sulfide, rare earth aluminate, rare earth silicate, or rare earth sulphur oxide.

4. The phosphorescent thermoplastic composite layered structure as claimed in claim 3, wherein
the reinforcing fiber has multiple fibers (40);
the fibers (40) comprise carbon fibers, glass fibers, mineral fibers, or polymer fibers; and
the fibers are short fibers, long fibers, continuous fibers, or woven fibers.

5. The phosphorescent thermoplastic composite layered structure as claimed in any one of claims 1, 2, and 4, wherein the thickness of the layered elements (10) is uniform or non-uniform.

## Patentansprüche

1. Phosphoreszierende thermoplastische Verbundschichtstruktur, aufweisend:
mehrschichtige Elemente (10), die aufeinander gestapelt sind, und jedes der mehrschichtigen Elemente (10) aufweisend
eine Polymermatrix; und
eine verstärkende Faser, die mit der Polymermatrix kombiniert ist; wobei die Polymermatrix ein thermoplastisches Harz (20) und eine phosphoreszierende Verbindung (30) umfasst, die phosphoreszierende Verbindung (30) in dem thermoplastischen Harz (20) dispergiert ist und mehrere Teilchen aufweist, die innerhalb des thermoplastischen Harzes (20) verteilt sind, und die verstärkende Faser mit der Polymermatrix der mehrschichtigen Elemente (10) kombiniert ist und jeweils zwei benachbarte der mehrschichtigen Elemente (10), die aufeinander gestapelt sind, einen dazwischen gebildeten Winkel aufweisen.

2. Phosphoreszierende thermoplastische Verbundschichtstruktur nach Anspruch 1, wobei das thermoplastische Harz (20) teilkristalline oder amorphe Polymere umfasst.

3. Phosphoreszierende thermoplastische Verbundschichtstruktur nach Anspruch 1 oder 2, wobei die phosphoreszierende Verbindung (30) aus mehreren Teilchen aus Sulfid, Seltenerdaluminat, Seltenerdsilikat oder Seltenerdschwefeloxid besteht.

4. Phosphoreszierende thermoplastische Verbundschichtstruktur nach Anspruch 3, wobei
die Verstärkungsfaser mehrere Fasern (40) aufweist;
die Fasern (40) Kohlenstofffasern, Glasfasern, Mineralfasern oder Polymerfasern umfassen; und
die Fasern kurze Fasern, lange Fasern, Endlosfasern oder gewebte Fasern sind.

5. Phosphoreszierende thermoplastische Verbundschichtstruktur nach einem der Ansprüche 1, 2 und 4, wobei die Dicke der Schichtelemente (10) gleichmäßig oder ungleichmäßig ist.

## Revendications

1. Structure composite thermoplastique phosphorescente en couche ayant :
des éléments à couches multiples (10) empilés les uns sur les autres, et chacun des éléments à couches multiples (10) ayant
une matrice polymère ; et
une fibre de renforcement combinée à la matrice polymère ; dans laquelle la matrice polymère comprend une résine thermoplastique (20) et un composé phosphorescent (30), le composé phosphorescent (30) est dispersé dans la résine thermoplastique (20) et présente plusieurs particules distribuées à l'intérieur de la résine thermoplastique (20), et la fibre de renforcement est combinée à la matrice polymère des éléments à couches multiples (10) et chacun des deux éléments adjacents des éléments à couches multiples (10) empilés les uns sur les autres présentent un angle formé entre eux.

2. Structure composite thermoplastique phosphorescente en couche selon la revendication 1, dans laquelle la résine thermoplastique (20) comprend des polymères semi-cristallins ou amorphes.

3. Structure composite thermoplastique phosphorescente en couche selon la revendication 1 ou 2, dans laquelle le composé phosphorescent (30) est constitué de multiples particules de sulfure, d'aluminate de terre rare, de silicate de terre rare ou d'oxyde de soufre de terre rare.

4. Structure composite thermoplastique phosphorescente en couche selon la revendication 3, dans laquelle
la fibre de renforcement présente plusieurs fibres (40) ;
les fibres (40) comprennent des fibres de carbone, des fibres de verre, des fibres minérales ou des fibres de polymère ; et
les fibres sont des fibres courtes, des fibres longues, des fibres continues ou des fibres tissées.

5. Structure composite thermoplastique phosphorescente en couche selon l'une quelconque des revendications 1, 2 et 4, dans laquelle l'épaisseur des éléments en couche (10) est uniforme ou non uniforme.
